(19) Europäisches Patentamt
European Patent Office
Office européen des brevets

(11) **EP 2 238 496 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(21) Anmeldenummer: **08864177.4**

(22) Anmeldetag: **26.11.2008**

(51) Int Cl.:
*G02B 7/32* (2006.01)    *G02B 3/00* (2006.01)
*G02B 7/28* (2006.01)

(86) Internationale Anmeldenummer:
**PCT/DE2008/001958**

(87) Internationale Veröffentlichungsnummer:
**WO 2009/079971 (02.07.2009 Gazette 2009/27)**

(54) **OPTOELEKTRONISCHE VORRICHTUNG UND BILDAUFNAHMEGERÄT**

OPTOELECTRONIC DEVICE, AND IMAGE RECORDING APPARATUS

DISPOSITIF OPTOÉLECTRONIQUE ET APPAREIL DE PRISE DE VUES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.12.2007 DE 102007062038**

(43) Veröffentlichungstag der Anmeldung:
**13.10.2010 Patentblatt 2010/41**

(73) Patentinhaber: **OSRAM Opto Semiconductors GmbH**
**93055 Regensburg (DE)**

(72) Erfinder:
• **MUSCHAWECK, Julius**
**82131 Gauting (DE)**
• **STREPPEL, Ulrich**
**93057 Regensburg (DE)**

(74) Vertreter: **Epping - Hermann - Fischer Patentanwaltsgesellschaft mbH**
**Schloßschmidstraße 5**
**80639 München (DE)**

(56) Entgegenhaltungen:
**US-A- 5 572 368      US-A- 5 612 821**
**US-A1- 2002 027 607      US-A1- 2003 227 685**
**US-A1- 2006 255 353**

**Beschreibung**

Es werden eine optoelektronische Vorrichtung und ein Bildaufnahmegerät angegeben.

In der Druckschrift US 5,572,368 A ist eine Lichtprojektionseinheit mit einer Zylinderlinse beschrieben.

Die Druckschrift US 2003/0227685 A1 betrifft einen Projektionsapparat zur Autofokussierung.

Ein Projektionsapparat und ein Bildaufnahmegerät sind in der Druckschrift US 2002/0027607 A1 angegeben.

Aus der Druckschrift US 5,612,821 A ist ein Mikrolinsensystem zur Kontrolle einer Abstrahlcharakteristik eines Leuchtdiodenarrays bekannt.

Es sind in der Druckschrift US 2006/0255353 A1 Gehäuse für Leuchtdiodenchips offenbart, wobei die Gehäuse ein Verkapselungsmaterial mit einem hohen Brechungsindex aufweisen.

Eine Aufgabe ist die Erzeugung von regelmäßigen Mustern, zum Beispiel Streifen, auf einem Objekt mittels einer kompakten Anordnung. Solche Muster sind zum Beispiel für Autofokussensoren in Digitalkameras notwendig, um mittels Aufnahme des Musters und Vergleich mit Sollgeometrien ein scharfes Kamerabild zu erzeugen.

Vorteile und weitere Merkmale ergeben sich aus der folgenden Beschreibung insbesondere auch unter Berücksichtigung der Figuren und der Patentansprüche.

Bisher werden solche Mustergeneratoren durch die Projektion eines Musters, ähnlich wie bei einem Diaprojektor, realisiert.

Es kann bei Verwendung einer LED als Lichtquelle die Kontaktstruktur auf der Oberfläche des LED-Chips als Ur-Muster in das Fernfeld mittels einer Projektionslinse abgebildet werden.

Dies bedeutet, dass:

- ein Ur-Muster vorgesehen ist, das abgebildet wird, was im Falle der Dia-Projektion ein zusätzliches Element im Aufbau bedeutet,

- eine Abhängigkeit von der Präzision des Urmusters besteht, das heisst, dass Fehler im Ur-Muster, oder Produktionstoleranzen abgebildet werden und zu systematischen Abweichungen von der Soll-Mustergeometrie führen.

Weiterhin wäre eine Mustererzeugung mittels einer Freiform-Projektionslinse möglich. Allerdings ist die Berechnung der Linsenform insbesondere für ausgedehnte Quellen äußerst kompliziert und aufgrund der komplizierten Oberflächenform ist die Herstellung solcher Linsen vergleichsweise aufwendig.

Es werden eine LED und ein geeignet geformtes Linsenarray miteinander kombiniert. Geht man zunächst von einem Punkt in der Mitte des LED-Chips aus, so wird die von diesem Punkt ausgehende sphärische Wellenfront durch das Linsenarray in einzelne zylindrische Wellenfronten aufgespalten beziehungsweise umgeformt. Dabei geht jede der zylindrischen Wellenfronten in eine andere Richtung und hat einen anderen Rotationswinkel der Zylinderachse. Eine Punktquelle in der Mitte der LED wird so zum Beispiel, bei entsprechender Anordnung der Linsen innerhalb des Arrays, zu einem perfekten gezackt-unterbrochenen Streifenmuster.

Die einzelnen Linsen des Linsenarrays ("Lenslets") sind zweckmäßigerweise so ausgeführt, dass Abbildungsfehler korrigiert sind. Dies ist für den oben angeführten Quellpunkt in der Mitte des LED Chips durch geeignete Formung der Linsenoberfläche möglich. Weiterhin kann die Vorderseite des einseitigen Linsenarrays auch mit einer Krümmung versehen werden und so außeraxiale Abbildungsfehler wie Koma verringern. Bei Annahme eines Quellpunktes entstehen somit dünne, scharfe Streifenmuster. Wird eine ausgedehnte Quelle verwendet, also wie in der LED der Fall, werden die Streifen entsprechend breiter.

Weitere Merkmale und Vorteile, welche im Rahmen der Erfindung erzielt werden können, sind:

- Es sind keine zusätzlichen Elemente wie "Ur-Muster" notwendig, die Musterprojektion wird direkt von der Abbildungsoptik/Linsenarray ausgeführt. Das Muster kann insbesondere erst durch die Optik erzeugt werden. Der Aufbau wird dadurch kompakter.

- Verfahren, die auf dem Prinzip der Diaprojektion beruhen, also ein Ur-Muster beleuchten und dieses dann abbilden, sind ineffizient, da der größte Teil des Lichtstromes bei der Durchstrahlung des Ur-Musters verloren geht. Vorliegend wird dagegen vorgeschlagen, nach dem Prinzip der Pupillenaufteilung zu arbeiten. Die einlaufende Wellenfront wird in einzelne Teil-Wellenfronten aufgespalten. Dabei findet keine systematische Abschattung statt.

- Unabhängigkeit von Quellgröße und Lichtstrom der Lichtquelle: Verkleinert man den LED-Chip, also den abgestrahlten Gesamtlichtstrom, so werden die Streifen innerhalb des Musters schmaler, aber auch heller. Somit wird der Verlust an Gesamtlichtstrom ausgeglichen. Es können also kleine LED-Chips eingesetzt werden, das heißt mit Chipflächen im Bereich 200$\mu$m x 200$\mu$m bis 300$\mu$m x 300$\mu$m.

Die Art des erzeugten Musters wird durch die Art der räumlichen Anordnung der Lenslets bestimmt. Dabei können die Lenslets unterschiedliche Oberflächenform wie auch unterschiedliche Größe haben. Durch unterschiedliche Lensletgrößen ist eine Angleichung der Helligkeiten der unterschiedlichen Streifen innerhalb des Musters möglich.

Eine besondere Leistung liegt in der Kombination einer LED und eines geeignet ausgeführten, das heisst zum Beispiel auf die in der Anordnung auftretenden Abbildungsfehler korrigierten, Linsenarrays, so dass im Fernfeld Muster ohne Verwendung eines Urmusters erzeugt werden.

Die optoelektronische Vorrichtung umfasst mindestens einen zur Erzeugung einer elektromagnetischen Strahlung geeigneten optoelektronischen Halbleiterchip. Es ist der Halbleiterchip eine Leuchtdiode.

Die optoelektronische Vorrichtung weist wenigstens ein optisches Element auf. Das optische Element ist mindestens zum Teil für die vom optoelektronischen Halbleiterchip erzeugte elektromagnetische Strahlung durchlässig, insbesondere transparent.

Es ist das optische Element einstückig ausgebildet. Zum Beispiel kann das optische Element über einen Spritz- oder Gießprozess geformt sein. Das optische Element kann mit einem Glas oder einem Epoxid gestaltet sein. Bevorzugt besteht das optische Element jedoch aus einem Kunststoff, insbesondere aus einem thermoplastischen Kunststoff, oder aus einem Silikon.

Das optische Element weist zwei einander gegenüberliegende Strahlungsdurchtrittsflächen auf. Die dem optoelektronischen Halbleiterchip zugewandte Strahlungsdurchtrittsfläche bildet eine Strahlungseintrittsfläche, die dem Halbleiterchip abgewandte Strahlungsdurchtrittsfläche eine Strahlungsaustrittsfläche. Die Strahlungsdurchtrittsflächen sind insbesondere diejenigen Flächen des optischen Elements, an denen Strahlung eine Brechung erfährt und/oder die zu einer gezielten Strahlformung dienen. Neben den Strahlungsdurchtrittsflächen kann das optische Element weitere Flächen aufweisen, die zum Beispiel zu einer Befestigung des optischen Elements dienen.

Es beinhaltet das optische Element mindestens eine, insbesondere genau eine Linsenanordnung. Mit anderen Worten sind im optischen Element linsenartige Gestaltungen in einem bestimmten Anordnungsraster zusammengefügt.

Es weist die Linsenanordnung eine Mehrzahl von voneinander abgegrenzten Linsenbereichen auf. Jeder Linsenbereich weist eine Linsenfläche auf, die eine Oberfläche des Linsenbereichs bildet und in einer linsenartigen Form, insbesondere einer Form ähnlich einer Sammellinse, ausgeformt ist.

Es ist die Linsenanordnung in einer der Strahlungsdurchtrittsflächen geformt, insbesondere in genau einer. Mit anderen Worten bilden die Linsenflächen der Linsenbereiche eine der Strahlungsdurchtrittsflächen oder mindestens einen Teil davon.

Es ist diejenige Strahlungsdurchtrittsfläche, in der keine Linsenanordnung geformt ist, glatt ausgeführt. Glatt bedeutet hierbei, dass diese Strahlungsdurchtrittsfläche eine einzige, zusammenhänge Fläche darstellt. Bevorzugt kann die Strahlungsdurchtrittsfläche, im Rahmen der Herstellungstoleranzen, als zweifach stetig differenzierbare Fläche beschrieben werden. Glatt bedeutet insbesondere auch, dass die zweite Ableitung, bezogen auf die gesamte Strahlungsdurchtrittsfläche, keinen Vorzeichenwechsel aufzeigt. Mit anderen Worten weist diese Strahlungsdurchtrittsfläche höchstens einen konkaven oder höchstens einen konvexen Krümmungsverlauf auf. Diese Strahlungsdurchtrittsfläche ist insbesondere nicht wellenartig geformt.

Es sind die Linsenbereiche dazu eingerichtet und angeordnet, dass die durch das optische Element und insbesondere durch verschiedene Linsenbereiche tretende Strahlung in verschiedene, zylindrische und/oder voneinander getrennte Wellenfronten geformt ist. Mit anderen Worten umfasst die Linsenanordnung mindestens zwei Linsenbereiche, wobei die durch diese zwei Linsenbereiche tretende Strahlung, die vom optoelektronischen Halbleiterchip emittiert wird, zumindest teilweise in unterschiedliche, voneinander separierte Raumbereiche gelenkt ist. Separierte beziehungsweise getrennte Raumbereiche kann bedeuten, dass zwischen diesen Raumbereichen, in die die Strahlung gelenkt wird, Areale liegen, in denen die Intensität der Strahlung vernachlässigbar ist, das heißt, zum Beispiel weniger als 15 %, insbesondere weniger als 3 % einer mittleren Intensität der Strahlung in den Raumbereichen beträgt.

Die optoelektronische Vorrichtung weist ein optisches Element und einen zur Erzeugung einer elektromagnetischen Strahlung geeigneten Halbleiterchip auf. Das optische Element ist einstückig ausgebildet und beinhaltet zwei einander gegenüberliegende Strahlungsdurchtrittsflächen. Das optische Element umfasst zudem eine Linsenanordnung mit einer Mehrzahl von voneinander abgegrenzten Linsenbereichen, wobei die Linsenanordnung in einer der Strahlungsdurchtrittsflächen geformt ist und die andere Strahlungsdurchtrittsfläche glatt ausgeführt ist. Zudem sind die Linsenbereiche dazu eingerichtet und derart angeordnet, dass die durch das optische Element tretende Strahlung von den jeweiligen Linsenbereichen in verschiedene, zylindrische und/oder voneinander getrennte Wellenfronten oder Strahlbündel geformt ist.

Gemäß zumindest einer Ausführungsform der optoelektronischen Vorrichtung sind die Linsenbereiche dazu eingerichtet und derart angeordnet, dass nach einem Durchtritt der Strahlung durch das optische Element von den Linsenbereichen die Wellenfronten derart gestaltet sind, dass diese verschiedene Ausbreitungsrichtungen und/oder verschiedene Rotationswinkel bezüglich einer Zylinderachse aufweisen. Die Zylinderachse ist insbesondere durch eine Mittelachse durch den optoelektronischen Halbleiterchip gebildet. Die Zylinderachse ist bevorzugt senkrecht zu einer Strahlung emittierenden Chipfläche des Halbleiterchips orientiert. Mit anderen Worten verläuft vom Halbleiterchip emittierte Strahlung, die durch einen der Linsenbereiche hindurch tritt, nach Verlassen der optoelektronischen Vorrichtung näherungsweise in Form eines parallelen Strahlbündels und in einem definierten Winkel zur Zylinderachse. Parallel bedeutet hierbei, dass die Divergenz des Strahlbündels in mindestens einer Raumrichtung, bevorzugt in beiden Raumrichtungen, nicht zu groß ist. Es werden also von den Linsenbereichen der Linsenanordnung in etwa parallele Strahlbündel erzeugt, die in bestimmte, voneinander verschiedene Raumrichtungen emittiert werden. Ein Divergenzwinkel der Strahlbündel beträgt weniger als 10°, bevorzugt weniger als 5°, insbesondere weniger als 2°.

Gemäß zumindest einer Ausführungsform der optoelektronischen Vorrichtung sind die von den einzelnen Linsenbereichen geformten Strahlbündel bezüglich mindestens einer Raumrichtung konvergent. Das heißt, die Strahlbündel weisen einen Brennpunkt oder eine Brennlinie auf. Der Brennpunkt beziehungsweise die Brennlinie befindet sich insbesondere in einem Abstand zwischen 10 cm und 5 m, bevorzugt zwischen 50 cm und 2 m von der Strahlungsaustrittsfläche der Vorrichtung entfernt.

Gemäß zumindest einer Ausführungsform der optoelektronischen Vorrichtung beträgt ein Abstand zwischen dem Halbleiterchip und der dem Halbleiterchip zugewandten Strahlungseintrittsfläche des optischen Elements mindestens ein Dreifaches eines mittleren Durchmessers des Halbleiterchips. Ist der Halbleiterchip zum Beispiel quadratisch, so entspricht der mittlere Durchmesser einer Kantenlänge des Halbleiterchips.

Gemäß zumindest einer Ausführungsform der optoelektronischen Vorrichtung ist das optische Element als Vorsatzelement vor dem Halbleiterchip ausgebildet. Das bedeutet, dass das optische Element mit dem Halbleiterchip auf einem gemeinsamen Träger oder in einer gemeinsamen Halterung montiert werden kann. Ebenso ist es möglich, dass das optische Element derart geformt ist, dass dieses auf einen Träger, auf dem sich der Halbleiterchip befindet, aufgesteckt oder über den Halbleiterchip übergestülpt werden kann. Es ist hierbei nicht notwendig, dass sich das optische Element in unmittelbarem Kontakt zum Halbleiterchip befindet. Zum Beispiel berühren sich der Halbleiterchip und das optische Element nicht.

Gemäß zumindest einer Ausführungsform der optoelektronischen Vorrichtung ist das optische Element im optoelektronischen Halbleiterchip integriert. Dies kann bedeuten, dass das optische Element wenigstens stellenweise in direktem Kontakt zum Halbleiterchip steht.

Es ist die Linsenanordnung in Form eines Linsenarrays, insbesondere in Form eines flächigen Linsenarrays, gestaltet. Mit anderen Worten sind in einer lateralen Richtung mehrere Linsenbereiche nebeneinander angeordnet.

Gemäß zumindest einer Ausführungsform der optoelektronischen Vorrichtung ist die Linsenanordnung flach gestaltet. Mit anderen Worten befinden sich die jeweiligen Linsenbereiche in einer Ebene. Sind die Linsenbereiche als Sammellinsen gestaltet, so befinden sich insbesondere alle Scheitelpunkte der einzelnen Linsenbereiche in einer Ebene.

Gemäß zumindest einer Ausführungsform der optoelektronischen Vorrichtung ist eine der Strahlungsdurchtrittsflächen eben ausgeführt. Bevorzugt ist die Strahlungsaustrittsfläche, die dem Halbleiterchip abgewandt ist, eben ausgeführt.

Gemäß zumindest einer Ausführungsform der optoelektronischen Vorrichtung weisen mindestens zwei Linsenbereiche unterschiedliche Formen und unterschiedliche Größen auf. Das heißt, die Linsenbereiche haben insbesondere unterschiedliche Ausdehnungen entlang einer Strahlungsdurchtrittsfläche des optischen Elements, seitens derer die Linsenanordnung ausgebildet ist. Bevorzugt weisen diejenigen Linsenbereiche, die weiter von der Zylinderachse entfernt gebildet sind, eine größere Fläche auf als solche Linsenbereiche, die sich näher an der Zylinderachse befinden.

Gemäß zumindest einer Ausführungsform der optoelektronischen Vorrichtung wird die vom Halbleiterchip emittierte Strahlung mittels eines Durchgangs durch das optische Element, insbesondere durch die Linsenanordnung, in ein vorgegebenes Muster abgebildet. Bei dem auszubildenden Muster kann es sich um ein zweidimensionales, gerastetes und/oder streifenförmiges Muster handeln.

Es entspricht ein Anordnungsraster der Linsenbereiche auf der Strahlungsdurchtrittsfläche einem Raster eines mit der Strahlung zu formenden beziehungsweise auszubildenden Musters. Wird zum Beispiel die Strahlung in Form von kreuzförmig angeordneten Rasterpunkten abgebildet, so sind die Linsenbereiche ebenfalls in einem kreuzförmigen Raster angeordnet.

Gemäß zumindest einer Ausführungsform der optoelektronischen Vorrichtung weisen die Linsenbereiche jeweils genau eine brechende Fläche auf. Das heißt, eine Lichtbrechung findet an genau einer Grenzfläche beziehungsweise einem Übergang zwischen zwei unterschiedlichen Brechungsindizes statt. Beim Durchlaufen des optischen Elements erfolgt also eine genau zweimalige Lichtbrechung, einmal an der Strahlungseintrittsfläche und ein weiteres mal an der Strahlungsaustrittsfläche.

Gemäß zumindest einer Ausführungsform der optoelektronischen Vorrichtung weisen die brechenden Flächen mindestens zweier Linsenbereiche unterschiedliche Krümmungsverläufe und unterschiedliche Größen auf. Mit anderen Worten ist die Linsenanordnung nicht durch ein wiederholtes Kopieren beziehungsweise Vervielfältigen eines einzigen Linsenbereichs erzeugbar.

Gemäß zumindest einer Ausführungsform der optoelektronischen Vorrichtung weist die Linsenanordnung mindestens eine, insbesondere mindestens zwei Symmetrieebenen in einer Richtung senkrecht zur Strahlungsdurchtrittsfläche auf. Ist also die Linsenanordnung auf einer Seite der Symmetrieebene gegeben, so ergibt sich die Linsenanordnung auf der anderen Seite der Symmetrieebene durch Spiegelung an der Symmetrieebene. Die Zylinderachse ist hierbei insbesondere ein Teil mindestens einer Symmetrieebene. Bevorzugt ist die Zylinderachse eine Schnittgerade der Symmetrieebenen.

Gemäß zumindest einer Ausführungsform der optoelektronischen Vorrichtung weisen Linsenbereiche, die nicht von der Zylinderachse geschnitten werden, höchstens eine Symmetrieebene senkrecht zu einer Strahlungsdurchtrittsfläche auf. Bevorzugt beinhaltet diese höchstens eine Symmetrieebene die Zylinderachse.

Gemäß zumindest einer Ausführungsform der optoelektronischen Vorrichtung emittiert der Halbleiterchip sichtbares Licht oder infrarote Strahlung. Bevorzugt ist die Strahlung spektral schmalbandig und weist Wellenlängen im Bereich zwischen einschließlich 580 nm und 1200 nm, insbesondere zwischen einschließlich 620 nm und 850 nm auf. Spektral schmalbandig bedeutet hierbei, dass eine spektrale Breite, FWHM, der Strahlung kleiner als 40 nm ist.

Gemäß zumindest einer Ausführungsform der optoelektronischen Vorrichtung sind die Linsenbereiche abbildungsfehlerkorrigiert ausgeführt.

Gemäß zumindest einer Ausführungsform der optoelektronischen Vorrichtung umfasst diese genau einen Halbleiterchip.

Gemäß zumindest einer Ausführungsform der optoelektronischen Vorrichtung umfasst diese genau ein optisches Element. Bevorzugt umfasst die Vorrichtung genau einen Halbleiterchip und genau ein optisches Element.

Gemäß zumindest einer Ausführungsform der optoelektronischen Vorrichtung ist diese frei von einer Negativvorlage oder einer Positivvorlage für das auszubildende Muster. Das heißt insbesondere, dass sich zwischen dem Halbleiterchip und dem optischen Element keine insbesondere diaartige Vorlage befindet. Bevorzugt ist auch auf dem Halbleiterchip beziehungsweise auf der Chipfläche keine Strukturierung oder kein Muster aufgebracht, das abgebildet wird und ein Urbild für das auszubildende Muster darstellt.

Gemäß zumindest einer Ausführungsform der optoelektronischen Vorrichtung ist diese zur Erzeugung eines vorzugsweise regelmäßigen Musters auf einer Abbildungsfläche beziehungsweise auf einem Objekt ausgebildet. Die Abbildungsfläche weist insbesondere einen Abstand zur Lichtaustrittsfläche zwischen einschließlich 0,1 m und 10 m auf, bevorzugt zwischen einschließlich 0,2 m und 2 m.

Gemäß zumindest einer Ausführungsform der optoelektronischen Vorrichtung ist das auszubildende Muster ein Muster einer Beleuchtungsstärkeverteilung. Mit anderen Worten ist das Muster durch eine definierte Intensitätsmodulation der Strahlung auf der Abbildungsfläche gebildet.

Gemäß zumindest einer Ausführungsform der optoelektronischen Vorrichtung ist das optische Element derart ausgebildet und/oder angeordnet, dass das auszubildende Muster eine Mehrzahl von getrennten Musterbereichen, insbesondere von Beleuchtungsinseln, aufweist. Ebenso können die Musterbereiche in einzelnen, voneinander separierten Streifen bestehen. Die einzelnen Musterbereiche weisen bevorzugt eine im Rahmen der Fertigungstoleranzen des optischen Elements bedingte gleiche Größe auf. In den Arealen zwischen den Musterbereichen ist die Intensität der Strahlung bevorzugt vernachlässigbar, wie bereits beschrieben.

Gemäß zumindest einer Ausführungsform der optoelektronischen Vorrichtung ist das optische Element, insbesondere die Linsenanordnung, dazu eingerichtet und angeordnet, dass die Strahlung durch das optische Element, insbesondere durch die Linsenanordnung und die Linsenbereiche, gemäß des auszubildenden Musters geformt ist.

Gemäß zumindest einer Ausführungsform der optoelektronischen Vorrichtung weist der Halbleiterchip in Aufsicht auf die dem optischen Element zugewandte Chipfläche einen Flächeninhalt von 400 $\mu$m x 400 $\mu$m oder weniger, bevorzugt 300 $\mu$m x 300 $\mu$m oder weniger auf.

Gemäß zumindest einer Ausführungsform der optoelektronischen Vorrichtung weist der Halbleiterchip in Aufsicht auf die dem optischen Element zugewandte Chipfläche einen Flächeninhalt von 150 $\mu$m x 150 $\mu$m oder mehr auf.

Gemäß zumindest einer Ausführungsform der optoelektronischen Vorrichtung weicht die von jedem einzelnen Linsenbereich emittierte Strahlungsleistung von einem Mittelwert, gemittelt über die von allen Linsenbereichen emittierte Strahlung, höchstens um 25 % ab. Die Linsenanordnung ist hierbei bevorzugt in der Strahlungsaustrittsfläche gestaltet. Mit anderen Worten emittiert jeder einzelne Linsenbereich eine vergleichbare Strahlungsleistung.

Es beträgt ein mittlerer Durchmesser der Linsenbereiche mehr als das 1,5-fache und weniger als das 3-fache eines mittleren Durchmessers der dem optischen Element zugewandten Chipfläche des Halbleiterchips. Die Größe der Linsenbereiche ist also mit der Größe und/oder mit der Leuchtstärke des Halbleiterchips korreliert.

Gemäß zumindest einer Ausführungsform der optoelektronischen Vorrichtung weist diese einen zentralen Linsenbereich auf. Der zentrale Linsenbereich wird von der Zylinderachse geschnitten. Die Zylinderachse stellt zudem eine Rotationssymmetrieachse des zentralen Linsenbereichs dar. Insbesondere ist der zentrale Linsenbereich sphärisch geformt.

Gemäß zumindest einer Ausführungsform der optoelektronischen Vorrichtung ist mindestens ein Linsenbereich, beziehungsweise dessen brechende Fläche, asphärisch geformt. Bevorzugt sind alle Linsenbereiche asphärisch geformt, wobei der zentrale Linsenbereich eine andere Formgebung aufweisen kann.

Asphärisch bedeutet, dass der Linsenbereich rotationssymmetrisch, aber nicht kugelartig geformt ist.

Gemäß zumindest einer Ausführungsform der optoelektronischen Vorrichtung ist mindestens ein Linsenbereich bikonisch geformt oder als Toroid- oder als Freiformlinse gestaltet. Bevorzugt sind alle Linsenbereiche derart geformt, wobei der zentrale Linsenbereich eine andere Formgebung aufweisen kann.

Gemäß zumindest einer Ausführungsform der optoelektronischen Vorrichtung ist diese zur Erzeugung eines Referenzmusters für eine Autofokuseinheit eines Bildaufnahmegeräts ausgebildet. Insbesondere dient die optoelektronische Vorrichtung zur Erzeugung eines Referenzmusters für einen Autofokussensor. Eine solche Autofokuseinheit kann zum Beispiel in einer Kamera, insbesondere einer Digitalkamera, oder in einem Mobiltelefon oder tragbaren Computer mit einer Bildaufnahmefunktion verwendet werden.

Es wird darüber hinaus ein Bildaufnahmegerät angegeben. Das Bildaufnahmegerät umfasst mindestens eine optische Vorrichtung, wie sie in Verbindung mit mindestens einer der oben genannten Ausführungsformen angegeben ist.

Gemäß zumindest einer Ausführungsform des Bildaufnahmegeräts umfasst dieses einen Sensor, der zur Detektion von reflektierter Strahlung der Strahlbündel eingerichtet ist.

Nachfolgend wird eine hier beschriebene optoelektronische Vorrichtung sowie ein hier beschriebenes Bildaufnahmegerät unter Bezugnahme auf die Zeichnung anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:

Figur 1 — schematische Seitenansichten von Ausführungsbeispielen von hier beschriebenen optoelektronischen Vorrichtungen mit einer konvexen Strahlungseintrittsfläche (A) und einer ebenen Strahlungsaustrittsfläche (B),

Figuren 2 bis 4 — schematische Darstellungen von weiteren Ausführungsbeispielen von hier beschriebenen optoelektronischen Vorrichtungen,

Figuren 5 und 6 — schematische Darstellungen von Ausführungsbeispielen von hier beschriebenen Linsenbereichen,

Figur 7 — schematische dreidimensionale Darstellungen (A, C, E, G) sowie zugehörige, auszubildende Muster (B, D, F, H) von Ausführungsbeispielen von hier beschriebenen optoelektronischen Vorrichtungen,

Figur 8 — eine schematische Darstellung einer Abhängigkeit eines mittleren Durchmessers der Linsenbereiche von einem Lichtstrom des Halbleiterchips,

Figur 9 — eine schematische Darstellung einer Abhängigkeit des Lichtstroms des Halbleiterchips von einer Anzahl an Beleuchtungsinseln,

Figur 10 — eine schematische Darstellung geometrischer Verhältnisse des auszubildenden Musters, und

Figur 11 — eine schematische Darstellung eines Ausführungsbeispiels eines hier beschriebenen Bildaufnahmegeräts.

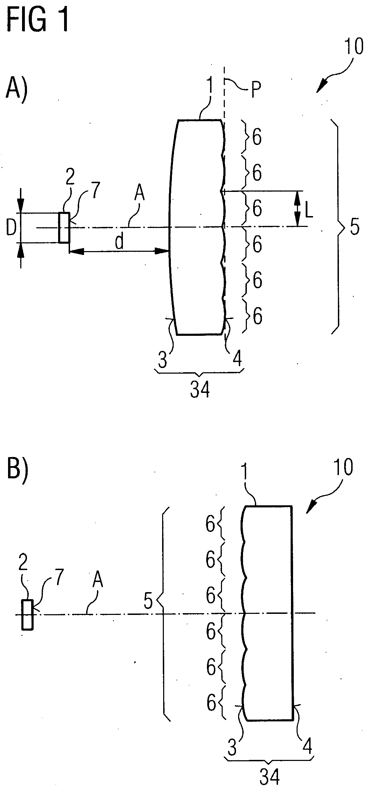

In Figur 1A ist ein Ausführungsbeispiel einer optoelektronischen Vorrichtung 10 dargestellt. Ein optoelektronischer Halbleiterchip 2 weist eine Chipfläche 7 auf, die einem optischen Element 1 zugewandt ist. Eine Zylinderachse A ist senkrecht zur Chipfläche 7 angeordnet und schneidet diese mittig.

Das optische Element 1 weist zwei Strahlungsdurchtrittsflächen 34 auf. Die dem Halbleiterchip 2 zugewandte Strahlungsdurchtrittsfläche 34 stellt eine Strahlungseintrittsfläche 3 dar, die dem Halbleiterchip 2 abgewandte Strahlungsdurchtrittsfläche 34 bildet eine Strahlungsaustrittsfläche 4. Die Strahlungseintrittsfläche 3 weist eine konvexe Krümmung auf. Die Strahlungsaustrittsfläche 4 ist in eine Mehrzahl von voneinander abgegrenzten Linsenbereichen 6 gegliedert. Die Linsenbereiche 6 bilden zusammen eine Linsenanordnung 5. Somit ist die Linsenanordnung 5 in der Strahlungsaustrittsfläche 4 gebildet. Die einzelnen Linsenbereiche 6 zeigen jeweils eine konvexe Gestalt, ähnlich einer Sammellinse, auf. Alle Scheitelpunkte der Linsenbereiche 6 befinden sich, im Rahmen der Herstellungstoleranzen, in einer Ebene P. Unter den Scheitelpunkten der Linsenbereiche 6 sind hierbei diejenigen Punkte der Linsenbereiche 6 zu verstehen, die in einer Richtung parallel zur Zylinderachse A am Weitesten vom Halbleiterchip 2 entfernt sind.

Die konvexe Strahlungseintrittsfläche 3 stellt eine glatte Fläche dar. Das bedeutet, dass die Strahlungseintrittsfläche 3 eine einzige, zusammenhängende Fläche ist. Außerdem weist die Strahlungseintrittsfläche 3 nur eine einzige Orientierung einer Krümmung auf. Die Strahlungsdurchtrittsfläche 3 kann, im Rahmen der Herstellungstoleranzen, als eine mathematische Fläche beschrieben werden, die nur eine Krümmungsrichtung aufweist. Wird, mit anderen Worten, diese Fläche zweifach abgeleitet, so zeigt die zweite Ableitung keinen Vorzeichenwechsel auf.

Ein Abstand d zwischen dem Halbleiterchip 2 und dem optischen Element 1 beträgt mindestens ein Dreifaches eines mittleren Durchmessers D des Halbleiterchips 2. Ist der Halbleiterchip 2 beispielsweise quadratisch gestaltet, so entspricht der mittlere Durchmesser D einer Kantenlänge des Halbleiterchips 2. Ein mittlerer Durchmesser L der Linsenbereiche 6 ist zirka doppelt so groß wie der mittlere Durchmesser D des Halbleiterchips 2. Es liegt der mittlere Durchmesser L der Linsenbereiche 6 zwischen dem 1,5-fachen und dem 3-fachen des mittleren Durchmessers D des Halbleiterchips 2.

In Figur 1B ist ebenfalls eine schematische Seitenansicht eines Ausführungsbeispiels der optoelektronischen Vorrichtung 10 gezeigt. Die Linsenanordnung 5 mit den Linsenbereichen 6 ist hierbei in der Strahlungseintrittsfläche 3 gebildet und somit dem optoelektronischen Halbleiterchip 2 zugewandt. Die Strahlungsaustrittsfläche 4 ist eben gestaltet.

Zur Vereinfachung der Darstellung ist das optische Element 1 in den folgenden Ausführungsbeispielen analog zu Figur 1A angeordnet. Genauso ist es jeweils möglich, dass das optische Element gemäß Figur 1B, also mit dem Halbleiterchip 2 zugewandter Linsenanordnung 5, gestaltet ist.

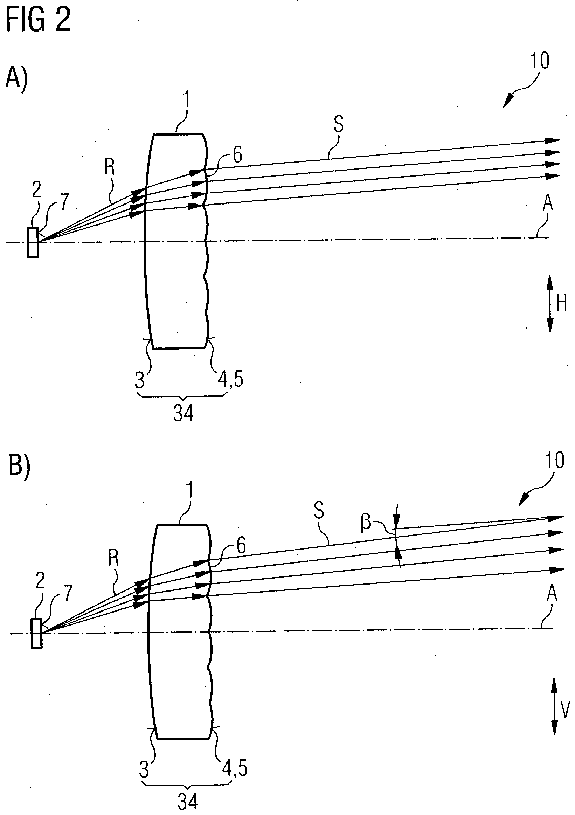

In Figur 2A ist eine schematische Draufsicht, in Figur 2B eine schematische Seitenansicht eines weiteren Ausführungsbeispiels der optoelektronischen Vorrichtung 10 gezeigt. Der Verlauf einer vom Halbleiterchip 2 emittierten Strahlung R sowie eines daraus durch das optische Element 1 geformten Strahlbündels S sind durch Pfeil-Linien symbolisiert.

Die an der Chipfläche 7 vom Halbleiterchip 2 emittierte Strahlung R verläuft divergent in Richtung zum optischen Element 1. Durch die konvexe Formgebung der Strahlungseintrittsfläche 3 erfolgt eine Kollimation der Strahlung R. Mit anderen Worten ist die Divergenz der Strahlung R innerhalb des optischen Elements 1 geringer. An dem Linsenbereich 6, der in Form einer Sammellinse ausgestaltet ist, erfolgt eine weitere Bündelung zum Strahlbündel S. In einer horizontalen Richtung H weist das Strahlbündel S nur eine vernachlässigbare Divergenz auf. In einer vertikalen Richtung V weist das Strahlbündel S, vergleiche Figur 2B, eine geringe Divergenz mit einem Divergenzwinkel $\beta$ von zirka 2,5° auf. Die Strahlformung durch den Linsenbereich 6 bezüglich der horizontalen H und vertikalen Richtung V ist also unterschiedlich.

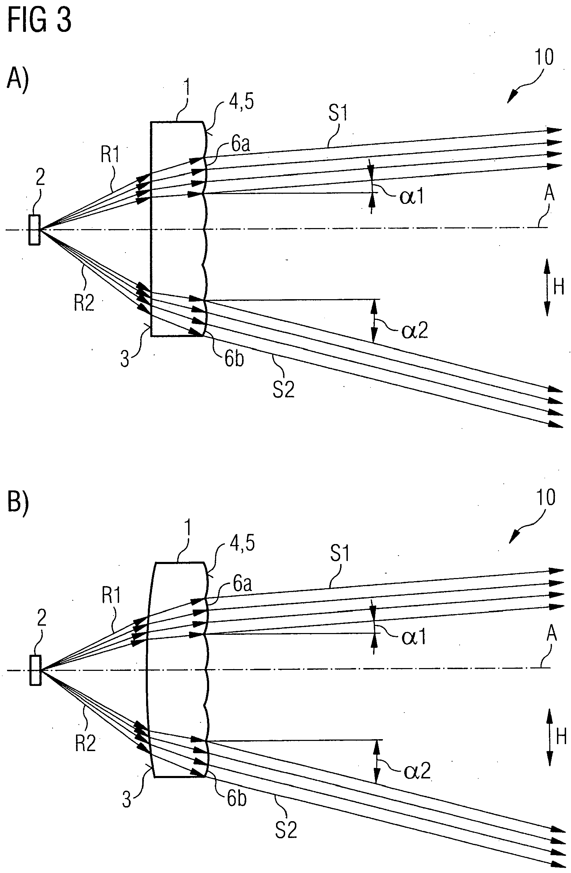

In Figur 2 ist nur die Strahlung R gezeichnet, die auf einen einzigen, bestimmten Linsenbereich 6 trifft. Die von jedem Linsenbereich 6 geformten, von einander getrennten Strahlbündel S können jeweils in bestimmte, voneinander verschiedene Richtungen geführt werden. Dies ist anhand zweier Ausführungsbeispiele der optoelektronischen Vorrichtung 10 in den Figuren 3A und 3B schematisch anhand von zwei Strahlbündeln S1, S2 illustriert. Zur Vereinfachung der Darstellung sind die Strahlbündel der weiteren Linsenbereiche nicht gezeichnet. Es sind in den Figuren 3A, 3B jeweils schematische Draufsichten dargestellt.

Vom Halbleiterchip 2 in verschiedene Richtungen emittierte Strahlung R1, R2 gelangt über die Strahlungseintrittsfläche 3 in das optische Element 1 und nachfolgend zu unterschiedlichen Linsenbereichen 6a, 6b. Durch diese Linsenbereiche 6a, 6b sind unterschiedliche Strahlbündel S1, S2 gebildet, die voneinander getrennte, näherungsweise zylindrische Wellenfronten darstellen. Zylindrisch bedeutet hierbei insbesondere, dass die Strahlbündel S1, S2, projiziert auf eine Ebene, ein Streifenmuster ergeben, und dass die Divergenz der Strahlbündel S1, S2 vernachlässigbar ist. Im Falle zylindrischer Wellenfronten sind die Linsenbereiche 6 bevorzugt ähnlich zu Zylinderlinsen geformt und erstrecken sich in eine Richtung senkrecht zur Zylinderachse A.

Die Strahlbündel S1, S2 weisen bezüglich der Zylinderachse A verschiedene Rotationswinkel $\alpha$1, $\alpha$2 auf. Gemäß Figur 3A beträgt der Rotationswinkel $\alpha$1 zirka 5° und der Rotationswinkel $\alpha$2 zirka 13°. Bevorzugt ist die Linsenanordnung 5 derart gestaltet, dass die gebildeten Strahlbündel verschiedene Rotationswinkel aufweisen, wobei mit zunehmendem Abstand von der Zylinderachse A eines das Strahlbündel bildenden Linsenbereichs sich bevorzugt auch der Rotationswinkel vergrößert. Mit anderen Worten schneiden sich die einzelnen Strahlbündel der von einzelnen Linsenbereichen 6 emittierten beziehungsweise geformten Strahlung in diesem Fall nicht.

Die Ausführungsbeispiele gemäß Figur 3A und 3B unterscheiden sich darin, dass gemäß Figur 3A die Strahlungseintrittsfläche 3 planar gestaltet ist und gemäß Figur 3B eine konvexe Krümmung aufweist. Durch die planare Gestaltung der Strahlungseintrittsfläche 3 kann es vereinfacht sein, das optische Element 1 beispielsweise über einen nicht gezeichneten gemeinsamen Träger am Halbleiterchip 2 zu befestigen. Eine konvexe Krümmung der Strahlungseintrittsfläche 3 erleichtert hingegen die Gestaltung der einzelnen Linsenbereiche 6, da die Strahlung R besser durch die Strahlungseintrittsfläche 3 kollimiert ist.

Anders als in Figur 2 und in Figur 3 dargestellt, können die Linsenbereiche 6 auch derart gestaltet sein, dass die Strahlbündel S1, S2 konvergent verlaufen und einen Brennpunkt oder eine Fokusebene zum Beispiel in einem Abstand von zirka 1 m zur Strahlungsaustrittsfläche 4 bilden.

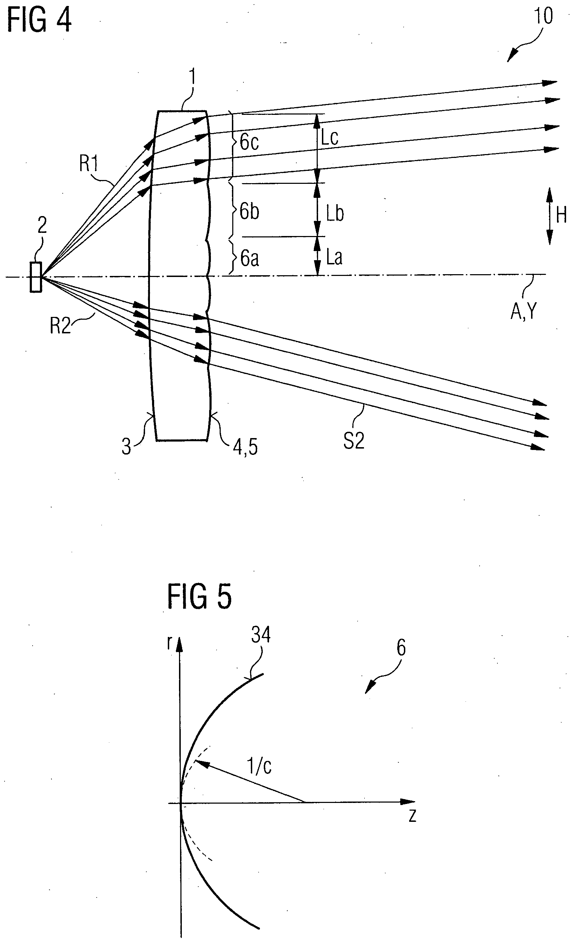

Beim Ausführungsbeispiel gemäß Figur 4 weisen die verschiedenen Linsenbereiche 6a, 6b, 6c verschiedene mittlere Durchmesser La, Lb, Lc auf. Die mittleren Durchmesser La, Lb, Lc nehmen, in einer Richtung von der Zylinderachse A weg, zu. Senkrecht zur Zeichenebene verläuft durch die Zylinderachse A eine Symmetrieebene Y des optischen Elements 1. Das optische Element Y kann auch eine weitere Symmetrieebene, beispielsweise parallel zur Zeichenebene, aufweisen.

Die Strahlung R1 trifft auf das optische Element 1 in einem Bereich, der weiter von der Zylinderachse A entfernt ist als für die Strahlung R2. Hierdurch ist ein Einfallwinkel, unter dem die Strahlung R1 auf das optische Element 1 trifft, kleiner als für die Strahlung R2. Durch die unterschiedlichen mittleren Durchmesser La, Lb, Lc ist gewährleistet, dass trotz der unterschiedlichen Einfallwinkel jeder Linsenbereich 6a, 6b, 6c mit einer vergleichbaren Strahlungsleistung vom Halbleiterchip 2 versorgt ist. Hierdurch weisen die Strahlbündel S1, S2 vergleichbare Leuchtstärken beziehungsweise Intensitäten auf.

In Figur 5 sind die geometrischen Parameter für eine brechende Fläche beziehungsweise für die Strahlungsdurchtrittsfläche 34 eines Linsenbereichs 6 veranschaulicht. Ein Scheitelpunkt des Linsenbereichs 6 liegt im Ursprung eines z-r-Koordinatensystems. Die z-Achse bildet die Ordinate und ist parallel zu einer optischen Achse des Linsenbereichs 6 orientiert. Die zur z-Achse orthogonale r-Achse, die die Abszissenachse darstellt, gibt im Wesentlichen den Abstand eines Punktes zur z-Achse an. Die z-Achse stellt also insbesondere eine Rotationssymmetrieachse dar, so dass durch die r-Achse eine r-Ebene senkrecht zur z-Achse definiert ist. Am Scheitelpunkt weist die Strahlungsdurchtrittsfläche 34 eine Linsenkrümmung c auf, wobei c dem Reziproken eines Krümmungsradius im Scheitelpunkt entspricht.

Im Falle einer asphärischen Strahlungsdurchtrittsfläche 34 ist deren Form mit folgender Formel beschreibbar:

$$z\,(r) \;=\; \frac{c \cdot r^2}{1+\sqrt{1-(1+k)\cdot c^2 \cdot r^2}} \;+\; \alpha_1 \cdot r^2 + \alpha_2 \cdot r^4 + \ldots + \alpha_8 \cdot r^{16}$$

z (r) entspricht hierbei einem Abstand eines Punktes der Strahlungsdurchtrittsfläche 34 von der r-Ebene in einer Richtung parallel zur z-Achse, wobei dieser Punkt eine Entfernung r zur z-Achse aufweist, in einer Richtung senkrecht zur z-Achse.

k entspricht der Konizität, $\alpha_i$ sind die asphärischen Koeffizienten. Der Parameter k bewirkt, dass das Linsenprofil kegelähnlicher wird. Mit anderen Worten wird durch den Parameter k der Abstand zwischen der r-Ebene und eines Punktes der Strahlungsdurchtrittsfläche 34 für große Werte von r kleiner als im Falle einer sphärischen Gestaltung des Linsenbereichs 6. Über die asphärischen Koeffizienten kann ebenfalls die Gestaltung der Strahlungsdurchtrittsfläche 34, insbesondere in Bereichen weit von der z-Achse weg, modifiziert werden.

Im Falle einer sphärischen Formgebung des Linsenbereichs 6 folgt die Strahlungsdurchtrittsfläche 34 ebenfalls obiger Formel, wobei für die Parameter $\alpha_i$ sowie k gilt: $\alpha_i = 0$ , k = 0.

Die z-Achse ist nicht notwendigerweise eine Rotationsachse des Linsenbereichs 6. Es kann der Linsenbereich 6 in einem solchen Fall als Toroidlinse oder als bikonische Linse ausgeformt sein. Hierbei spannt eine x-Achse und eine hierzu orthogonale y-Achse eine xy-Ebene auf, auf der die z-Achse senkrecht steht, entsprechend der r-Ebene. Die xy-Ebene schneidet die z-Achse im Scheitelpunkt der Strahlungsdurchtrittsfläche 34. Der Abstand eines Punktes der Strahlungsdurchtrittsfläche 34 mit den Koordinaten (x, y) von der xy-Ebene kann in diesem Fall insbesondere mit folgender Formel angegeben werden:

$$z\,(x,\,y) \;=\; \frac{c_x \cdot x^2 + c_y \cdot y^2}{1+\sqrt{1-(1+k_x)\cdot c_x^{\,2} \cdot x^2 -(1+k_y)\cdot c_y^{\,2} \cdot y^2}}$$

Optional kann diese Formel Korrekturterme $\alpha_i \cdot E_i$ (x, y) enthalten, analog zur Formel für die Gestaltung einer asphärischen Strahlungsdurchtrittsfläche 34. Hierbei gilt für die $E_i$ : $E_1 = x$, $E_2 = y$, $E_3 = x^2$, $E_4 = x \cdot y$, $E_5 = y^2$, $E_6 = x^3$, $E_7 = x^2 \cdot y$, $E_8 = x \cdot y^2$, $E_9 = y^3$ und so weiter.

Weiterhin ist es möglich, dass die Form der Strahlungsdurchtrittsfläche 34 weder der Formel für eine sphärische, noch für eine asphärische, noch für eine bikonische oder Toroidlinse entspricht. In diesem Falle spricht man insbesondere von einer so genannten Freiformlinse.

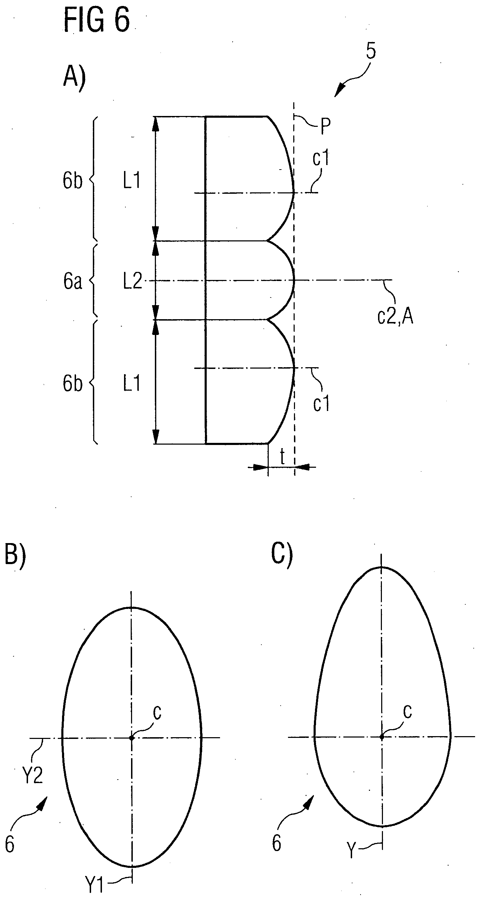

In Figur 6 sind verschiedene Ausführungsformen der Linsenbereiche 6 beziehungsweise der Linsenanordnung 5 dargestellt.

In Figur 6A ist eine schematische Seitenansicht der Linsenanordnung 5 gezeigt. Der Linsenbereich 6a weist eine Scheitelachse c2 auf, die mit der Zylinderachse A der Vorrichtung 10 zusammenfällt. Der Linsenbereich 6a mit dem mittleren Durchmesser L2 ist rotationssymmetrisch bezüglich der Scheitelachse c2 geformt.

Die Linsenbereiche 6b, die einen größeren mittleren Durchmesser L1 aufweisen als der Linsenbereich 6a, sind bezüglich den Scheitelachsen c1 asymmetrisch in Form von Freiformlinsen gestaltet. Alle Scheitelpunkte der Linsenbereiche 6a, 6b befinden sich in der Ebene P. Eine Tiefe t der Linsenanordnung 5 ist für alle Linsenbereiche 6a, 6b im Rahmen der Herstellungstoleranzen gleich.

In den Figuren 6B, 6C sind schematische Draufsichten auf einen bikonisch gestalteten Linsenbereich 6 und einen als Freiformlinse gestalteten Linsenbereich 6 dargestellt. Der bikonische Linsenbereich 6 gemäß Figur 6B weist zwei Symmetrieebenen Y1, Y2 auf, die senkrecht zur Zeichenebene orientiert sind. Die Scheitelachse c ist durch eine Schnittachse der Symmetrieebenen Y1, Y2 gebildet. Im Falle des als Freiform gestalteten Linsenbereichs 6 gemäß Figur 6C ist nur eine einzige Symmetrieebene Y vorhanden. Die Scheitelachse c ist senkrecht zur Zeichenebene orientiert, verläuft durch den Scheitelpunkt und liegt in der Symmetrieebene Y. Zum Beispiel sind die Linsenbereiche 6b in Figur 6A wie in Figur 6C ausgeformt. Bei einer Gestaltung des Linsenbereichs 6 als Freiformlinse ist es ebenso möglich, dass der Linsenbereich 6 keine einzige Symmetrieebene aufweist.

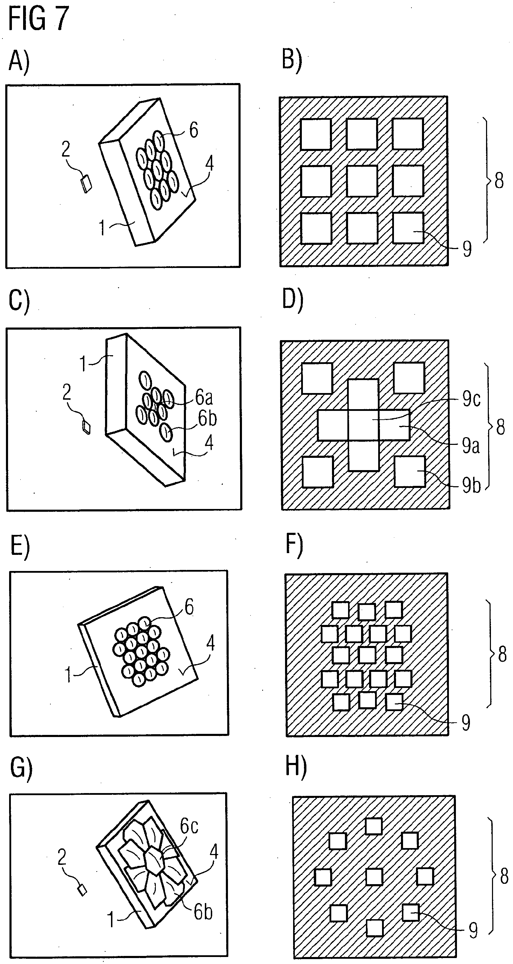

In Figur 7 sind mehrere Ausführungsbeispiele der optoelektronischen Vorrichtung 10 gezeigt. Zu einer bestimmten Gestaltungsform des optischen Elements 1, insbesondere der Linsenanordnung 5 und der Linsenbereiche 6, ist jeweils ein erzieltes, auszubildendes Muster 8 dargestellt. Das auszubildende Muster 8 beziehungsweise dessen Beleuchtungsstärkeverteilung ist jeweils in einem Abstand von 1 m zur Strahlungsaustrittsfläche 4 angegeben. Die Linsenbereiche 6 befinden sich beispielsweise an der Strahlungsaustrittsfläche 4, also an der dem optoelektronischen Halbleiterchip 2 abgewandten Seite des optischen Elements 1.

Gemäß Figur 7A sind neun Linsenbereiche 6 in einem quadratischen 3x3-Raster angeordnet. Das zugehörige auszubildende Muster 8, vergleiche Figur 7B, weist neun Beleuchtungsinseln 9 auf. Die Beleuchtungsinseln 9 sind voneinander durch dunkle Areale getrennt und entsprechend dem Anordnungsraster der Linsenbereiche 6 auf der Strahlungsaustrittsfläche 4 angeordnet. Die Beleuchtungsinseln 9 weisen näherungsweise eine quadratische Gestalt auf. Alle Beleuchtungsinseln 9 sind in etwa gleich hell.

Gemäß Figur 7C sind fünf innere Linsenbereiche 6a sternförmig angeordnet. Vier äußere Linsenbereiche 6b sind an den Eckpunkten eines Quadrats angeordnet. Das auszubildende Muster 8, siehe Figur 7D, entspricht wieder dem Anordnungsraster der Linsenbereiche 6 und weist die inneren 9a, 9c und die äußeren Beleuchtungsinseln 9b auf. Mit Ausnahme einer zentralen Beleuchtungsinsel 9c weisen alle Beleuchtungsinseln 9a, 9b eine vergleichbare Helligkeit auf. Die zentrale Beleuchtungsinsel 9c erscheint heller.

Gemäß Figur 7E sind die Linsenbereiche 6 in einem hexagonalen Muster angeordnet. Die zugehörigen Beleuchtungsinseln 9, die jeweils voneinander separiert sind, zeigen ebenfalls ein hexagonales auszubildendes Muster, siehe Figur 7F.

Gemäß Figur 7G sind um einen zentralen Linsenbereich 6c acht weitere Linsenbereiche 6b ringförmig angeordnet. Das auszubildende Muster 8, vergleiche Figur 7H, entspricht dem Anordnungsmuster der Linsenbereiche 6b, 6c. Alle Beleuchtungsinseln 9 weisen eine vergleichbare Helligkeit auf.

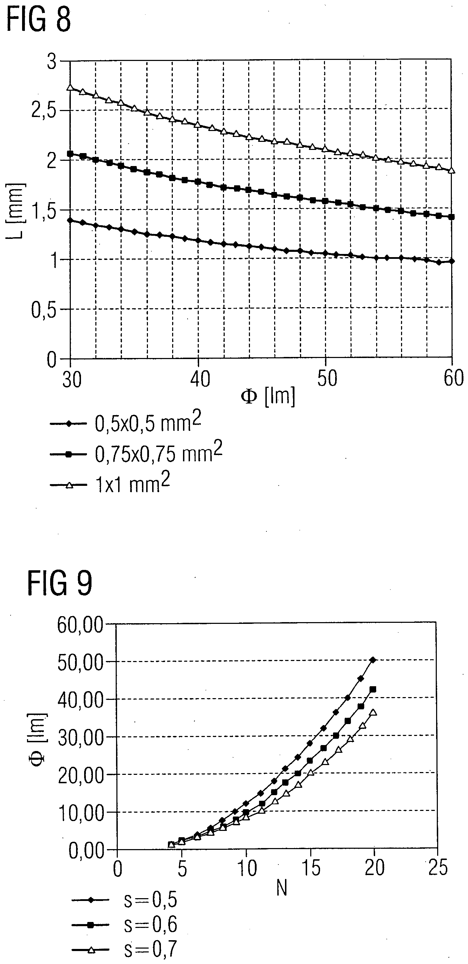

In Figur 8 ist der mittlere Durchmesser L der Linsenbereiche 6 in Millimetern gegenüber einem Lichtstrom Φ des Halbleiterchips 2 in Lumen angegeben. Die gezeigten Kurven sind bezogen auf unterschiedliche Abmessungen des Halbleiterchips 2. Der Lichtstrom Φ des von den Halbleiterchips 2 emittierten Lichts ist, unter vergleichbaren Betriebsbedingungen der Halbleiterchips 2, in einfacher Näherung in etwa proportional zur Fläche der Halbleiterchips 2.

Weist der Halbleiterchip 2 zum Beispiel eine Fläche von 0,5 x 0,5 mm$^2$ auf, vergleiche die Rauten-Kurve, so bewegt sich der mittlere Durchmesser L der Linsenbereiche 6 im Bereich von zirka 1,4 mm für Halbleiterchips 2 mit einem geringen Lichtstrom von zirka 30 lm. Zeigen die Halbleiterchips 2 einen hohen Lichtstrom 4 von etwa 60 lm auf, so beträgt der mittlere Durchmesser L zirka 1 mm. Für alle gezeigten Kurven liegt der mittlere Durchmesser L zwischen dem 1,5-fachen und dem 3-fachen einer Kantenlänge des Halbleiterchips 2. Die Beleuchtungsinseln 9 weisen hierbei jeweils eine Beleuchtungsstärke von zirka 25 lm/m$^2$ = 25 lx auf.

In Figur 9 ist die Abhängigkeit des benötigten Lichtstroms Φ des Halbleiterchips 2 in Abhängigkeit von einer Anzahl N an Beleuchtungsinseln 9 dargestellt. Eine Beleuchtungsstärke E einer Beleuchtungsinsel 9 ergibt sich aus dem Produkt des Lichtstroms Φ des Halbleiterchips 2 mal einer Effizienz s der Optiken geteilt durch das Quadrat der Anzahl N der Beleuchtungsinseln 9 sowie geteilt durch eine Fläche a der Beleuchtungsinseln 9. Zur Verwendung der optoelektronischen Vorrichtung 10 in einer Autofokuseinheit beziehungsweise in einem Autofokussensor ist eine Beleuchtungsstärke E von zirka 25 lx, gleich 25 lm/m$^2$, erforderlich. Die Fläche a der Beleuchtungsinseln 9 beträgt hierbei zirka 3 mm$^2$, ein Abstand zwischen der optoelektronischen Vorrichtung 10 und einem Objekt beträgt zirka 1 m. Bei einem solchen Abstand liegt die Fläche a der Beleuchtungsinseln 9 bevorzugt im Bereich zwischen etwa 2 mm$^2$ und zirka 1 cm$^2$.

Die Effizienz s entspricht einem Wirkungsgrad des optischen Elements 1. Die Effizienz s ist kleiner als 1, da Verluste am optischen Element 1 zum Beispiel durch Reflexion an den Strahlungsdurchtrittsflächen 34 auftreten. Ebenso gelangt die vom Halbleiterchip 2 emittierte Strahlung R nicht vollständig zum optischen Element 1. Da der Halbleiterchip 2 nur näherungsweise einer Punktlichtquelle entspricht, treten ebenfalls Verluste bei der optischen Abbildung über das optische Element 1 auf. Die Effizienz s liegt typisch im Bereich zwischen 0,7 und 0,5.

Aus dem Zusammenhang für die Beleuchtungsstärke E lässt sich für den vom Halbleiterchip 2 zu emittierenden Lichtstrom Φ, bei einer gegebenen, benötigten Beleuchtungsstärke E und einer gegebenen Fläche a der Beleuchtungsinseln 9, in Abhängigkeit von der Anzahl N der Beleuchtungsinseln 9 und in Abhängigkeit von der Effizienz s, folgender Zusammenhang ableiten:

$$\Phi\ (\mathrm{N})\ =\ \frac{E \cdot a \cdot N^2}{s}$$

Für mittlere Effizienzen s von 0,6 sind für das abzubildende Muster, wie beispielsweise in Figur 7 illustriert, Lichtströme Φ des Halbleiterchips 2 im Bereich von 30 lm ausreichend.

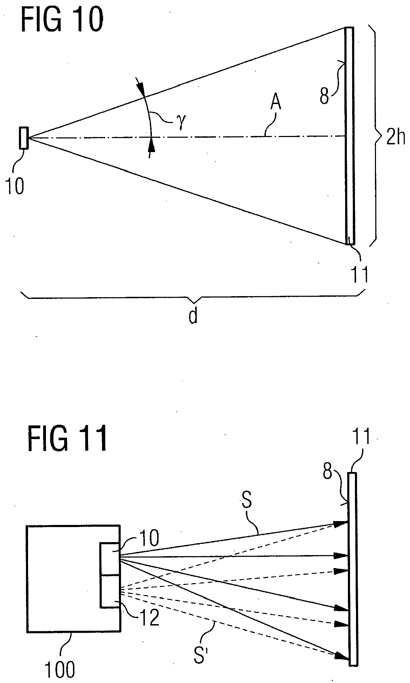

In Figur 10 sind schematisch einige geometrische Kenngrößen bei der Ausbildung des Musters veranschaulicht. Das abzubildende Muster 8 wird von der optoelektronischen Vorrichtung 10 beispielsweise in einem Abstand d von zirka 1 m auf das Objekt 11 projiziert. Das Objekt 11 ist zum Beispiel eine Art Schirm oder ein von einem Bildaufnahmegerät aufzuzeichnender Gegenstand. Die Projektion des Muster 8 erfolgt, bezüglich der Zylinderachse A, in einem Bereich mit einem Öffnungswinkel y von zirka 20°. Das auszubildende Muster 8 weist auf dem Objekt 11 einen Radius h von zirka 35 cm auf.

In Figur 11 ist schematisch ein Ausführungsbeispiel des Bildaufnahmegeräts 100 dargestellt. Von der optoelektronischen Vorrichtung 10 werden die Strahlbündel S auf das Objekt 11 projiziert. Durch die Vorrichtung 10 ist auf dem Objekt 11 beispielsweise ein auszubildendes Muster 8 gemäß der Figur 7, oder auch ein Streifenmuster, gebildet. Ein Sensor 12 nimmt vom Objekt 11 diffus zurückgeworfene Strahlung S' der Strahlbündel S auf und ermittelt hierüber eine geeignete Fokuseinstellung für das Bildaufnahmegerät 100.

**Patentansprüche**

1. Optoelektronische Vorrichtung (10) mit genau einem optischen Element (1) und genau einem zur Erzeugung einer elektromagnetischen Strahlung geeigneten optoelektronischen Halbleiterchip (2), der eine Leuchtdiode ist, wobei das optische Element (1)

   - einstückig ausgebildet ist,
   - zwei einander gegenüberliegende Strahlungsdurchtrittsflächen (34) beinhaltet,
   - eine Linsenanordnung (5) mit einer Mehrzahl von voneinander abgegrenzten Linsenbereichen (6) aufweist, wobei die Linsenanordnung (5) in einer der Strahlungsdurchtrittsflächen (34) geformt ist und die andere Strahlungsdurchtrittsfläche (34) glatt ausgeführt ist,

   und wobei die Linsenbereiche (6) dazu eingerichtet und angeordnet sind, dass die durch das optische Element (1) tretende Strahlung in verschiedene, zylindrische und/oder voneinander getrennte Wellenfronten geformt ist, **dadurch gekennzeichnet, dass** ein mittlerer Durchmesser (L) der Linsenbereiche (6) mehr als das 1,5fache und weniger als das Dreifache eines mittleren Durchmessers (D) der dem optischen Element (1) zugewandten Chipfläche (7) beträgt und ein zweidimensionales Anordnungsraster der Linsenbereiche (6) einem Raster eines mit der Strahlung auszubildenden Musters entspricht.

2. Optoelektronische Vorrichtung (10) nach Anspruch 1, bei der die Linsenbereiche (6) dazu eingerichtet und angeordnet sind, dass nach einem Durchtritt der Strahlung durch das optische Element (1) die Wellenfronten dergestalt gebildet sind, dass diese verschiedene Ausbreitungsrichtungen und/oder verschiedene Rotationswinkel ($\alpha$) bezüglich einer Zylinderachse (A) aufweisen.

3. Optoelektronische Vorrichtung (10) nach Anspruch 1 oder 2, bei der ein Abstand (d) zwischen dem Halbleiterchip (2) und der dem Halbleiterchip (2) zugewandten Strahlungsdurchtrittsfläche (34) mindestens ein Dreifaches eines mittleren Durchmessers (B) des Halbleiterchips (2) beträgt.

4. Optoelektronische Vorrichtung (10) nach einem der vorhergehenden Ansprüche, bei der das optische Element (1) als Vorsatzelement vor dem Halbleiterchip (2) ausgebildet ist.

5. Optoelektronische Vorrichtung (10) nach einem der vorhergehenden Ansprüche, bei der eine der Strahlungsdurchtrittsflächen (34) eben ausgeführt ist.

6. Optoelektronische Vorrichtung (10) nach einem der vorhergehenden Ansprüche, bei der die Linsenbereiche (6) unterschiedliche Formen und unterschiedliche Größen aufweisen.

7. Optoelektronische Vorrichtung (10) nach mindestens Anspruch 2, bei der die mittleren Durchmesser (L) der einzelnen Linsenbereiche (6), in Richtung weg von der Zylinderachse (A), zunehmen.

8. Optoelektronische Vorrichtung (10) nach einem der vorhergehenden Ansprüche, bei der die Linsenbereiche (6) jeweils genau eine brechende Fläche aufweisen und die brechenden Flächen zweier Linsenbereiche (6) unterschiedliche Krümmungsverläufe und unterschiedliche Größen aufweisen.

9. Optoelektronische Vorrichtung (10) nach einem der Ansprüche 1 bis 4,
   bei der die dem Halbleiterchip (2) zugewandte Strahlungsdurchtrittsfläche (3) als zweifach stetig differenzierbare Fläche beschreibbar ist und die zweite Ableitung, bezogen auf die gesamte dem Halbleiterchip (2) zugewandte Strahlungsdurchtrittsfläche (3), keinen Vorzeichenwechsel aufzeigt, sodass die dem Halbleiterchip (2) zugewandte Strahlungsdurchtrittsfläche (3) genau einen konvexen Krümmungsverlauf aufweist.

10. Optoelektronische Vorrichtung (10) nach einem der vorhergehenden Ansprüche,
    die frei von einer Negativvorlage oder einer Positivvorlage des auszubildenden Musters ist.

11. Optoelektronische Vorrichtung (10) nach einem der vorhergehenden Ansprüche,
    bei der der Halbleiterchip (2) in Aufsicht auf eine dem optischen Element (1) zugewandte Chipfläche (7) einen Flächeninhalt von mehr als 150 µm x 150 µm und von weniger als 400 µm x 400 µm aufweist.

12. Optoelektronische Vorrichtung (10) nach einem der vorhergehenden Ansprüche,
    bei der die von jedem einzelnen Linsenbereich (6) emittierte Strahlungsleistung von einem Mittelwert höchstens um 25 % abweicht.

13. Optoelektronische Vorrichtung (10) nach einem der vorhergehenden Ansprüche,
    bei der die Strahlungsdurchtrittsflächen (34) der einzelnen Linsenbereiche (6) als Freiform mit genau einer Symmetrieebene, sphärisch, asphärisch oder bikonisch geformt sind.

14. Optoelektronische Vorrichtung (10) nach einem der vorhergehenden Ansprüche,
    die zur Erzeugung eines Referenzmusters für eine Autofokuseinheit eines Bildaufnahmegeräts ausgebildet ist.

15. Bildaufnahmegerät mit einer optischen Vorrichtung (10) nach einem der vorhergehenden Ansprüche und mit einem Sensor (11), das für eine Autofokussierung eingerichtet ist.

**Claims**

1. Optoelectronic device (10) comprising exactly one optical element (1) and exactly one optoelectronic semiconductor chip (2) suitable for generating an electromagnetic radiation, said optoelectronic semiconductor chip being a light-emitting diode,
   wherein the optical element (1)

   - is embodied in an integral fashion,
   - comprises two radiation passage surfaces (34) situated opposite one another,
   - has a lens arrangement (5) comprising a plurality of lens regions (6) delimited from one another,

   wherein the lens arrangement (5) is shaped in one of the radiation passage surfaces (34) and the other radiation passage surface (34) is embodied in a smooth fashion,
   and wherein the lens regions (6) are configured and arranged to the effect that the radiation passing through the optical element (1) is shaped into different, cylindrical and/or mutually separate wavefronts,
   **characterized in that**
   an average diameter (L) of the lens regions (6) is more than 1.5 times and less than three times an average diameter (D) of the chip surface (7) facing the optical element (1) and a two-dimensional arrangement grid of the lens regions (6) corresponds to a grid of a pattern to be formed with the radiation.

2. Optoelectronic device (10) according to Claim 1, wherein the lens regions (6) are configured and arranged to the effect that after the radiation has passed through the optical element (1), the wavefronts are formed in such a way that they have different directions of propagation and/or different rotation angles ($\alpha$) with respect to a cylinder axis (A).

3. Optoelectronic device (10) according to Claim 1 or 2,
   wherein a distance (d) between the semiconductor chip (2) and the radiation passage surface (34) facing the semiconductor chip (2) is at least three times an average diameter (B) of the semiconductor chip (2).

4. Optoelectronic device (10) according to any of the preceding claims,
wherein the optical element (1) is embodied as an auxiliary element in front of the semiconductor chip (2).

5. Optoelectronic device (10) according to any of the preceding claims,
wherein one of the radiation passage surfaces (34) is embodied in a planar fashion.

6. Optoelectronic device (10) according to any of the preceding claims,
wherein the lens regions (6) have different shapes and different sizes.

7. Optoelectronic device (10) according to at least Claim 2, wherein the average diameters (L) of the individual lens regions (6) increase, in a direction away from the cylinder axis (A).

8. Optoelectronic device (10) according to any of the preceding claims,
wherein the lens regions (6) have in each case exactly one refractive surface and the refractive surfaces of two lens regions (6) have different curvature profiles and different sizes.

9. Optoelectronic device (10) according to any of Claims 1 to 4,
wherein the radiation passage surface (3) facing the semiconductor chip (2) is describable as a twice continuously differentiable surface and the second derivative, relative to the entire radiation passage surface (3) facing the semiconductor chip (2), exhibits no change of sign, such that the radiation passage surface (3) facing the semiconductor chip (2) has exactly one convex curvature profile.

10. Optoelectronic device (10) according to any of the preceding claims,
which is free of a negative original or of a positive original of the pattern to be formed.

11. Optoelectronic device (10) according to any of the preceding claims,
wherein the semiconductor chip (2), in a plan view of a chip surface (7) facing the optical element (1), has a surface area of more than 150 $\mu$m x 150 $\mu$m and less than 400 $\mu$m x 400 $\mu$m.

12. Optoelectronic device (10) according to any of the preceding claims,
wherein the radiation power emitted by each individual lens region (6) deviates from an average value at most by 25%.

13. Optoelectronic device (10) according to any of the preceding claims,
wherein the radiation passage surfaces (34) of the individual lens regions (6) are shaped as freeform shape with exactly one plane of symmetry, spherically, aspherically or biconically.

14. Optoelectronic device (10) according to any of the preceding claims,
which is designed for generating a reference pattern for an autofocus unit of an image recording apparatus.

15. Image recording apparatus comprising an optical device (10) according to any of the preceding claims and comprising a sensor (11) configured for autofocusing.

**Revendications**

1. Dispositif optoélectronique (10) comprenant exactement un élément optique (1) et exactement une puce en semiconducteur optoélectronique (2) adaptée pour générer un rayonnement électromagnétique, laquelle est une diode électroluminescente,
l'élément optique (1)

- étant réalisé d'un seul tenant,
- comportant deux surfaces de traversée de rayonnement (34) opposées l'une à l'autre,
- possédant un arrangement de lentilles (5) avec une pluralité de zones de lentille (6) délimitées les unes par rapport aux autres,

l'arrangement de lentilles (5) étant formé dans l'une des surfaces de traversée de rayonnement (34) et l'autre surface de traversée de rayonnement (34) étant réalisée lisse,
et les zones de lentille (6) étant conçues et disposées de telle sorte que le rayonnement qui passe à travers l'élément optique (1) est façonné dans différents fronts d'onde cylindriques et/ou séparés les uns des autres,
**caractérisé en ce que**
un diamètre moyen (L) des zones de lentille (6) est égal à plus de 1,5 fois et à moins du triple d'un diamètre moyen (D) de la surface de puce (7) faisant face à l'élément optique (1) et une grille d'arrangement bidimensionnelle des zones de lentille (6) correspond à une grille d'un motif à former avec le rayonnement.

2. Dispositif optoélectronique (10) selon la revendication 1, avec lequel les zones de lentille (6) sont conçues et disposées de telle sorte qu'après un passage du rayonnement à travers l'élément optique (1), les fronts d'onde sont façonnés de telle sorte que ceux-ci présentent des directions de propagation différentes et/ou des angles de rotation (α) différents par rapport à un axe de cylindre (A).

3. Dispositif optoélectronique (10) selon la revendication 1 ou 2, avec lequel un écart (d) entre la puce en semiconducteur (2) et la surface de traversée de rayonnement (34) qui fait face à la puce en semiconducteur (2) est égal au moins à un triple d'un diamètre moyen (B) de la puce en semiconducteur (2).

4. Dispositif optoélectronique (10) selon l'une des revendications précédentes, avec lequel l'élément optique (1) est réalisé sous la forme d'un élément additionnel devant la puce en semiconducteur (2).

5. Dispositif optoélectronique (10) selon l'une des revendications précédentes, avec lequel l'une des surfaces de traversée de rayonnement (34) est réalisée plane.

6. Dispositif optoélectronique (10) selon l'une des revendications précédentes, avec lequel les zones de lentille (6) présentent des formes différentes et des tailles différentes.

7. Dispositif optoélectronique (10) selon au moins la revendication 2, avec lequel les diamètres moyens (L) de chacune des zones de lentille (6) augmentent dans la direction s'éloignant de l'axe de cylindre (A).

8. Dispositif optoélectronique (10) selon l'une des revendications précédentes, avec lequel les zones de lentille (6) présentent respectivement exactement une surface réfringente et les surfaces réfringentes de deux zones de lentille (6) présentent des tracés de courbure différents et des tailles différentes.

9. Dispositif optoélectronique (10) selon l'une des revendications 1 à 4, avec lequel la surface de traversée de rayonnement (3) qui fait face à la puce en semiconducteur (2) peut être décrite comme une surface double continuellement différentiable et la deuxième dérivation, rapportée à la totalité de la surface de traversée de rayonnement (3) qui fait face à la puce en semiconducteur (2), ne présente aucun changement de signe, de sorte que la surface de traversée de rayonnement (3) qui fait face à la puce en semiconducteur (2) présente exactement un tracé de courbure convexe.

10. Dispositif optoélectronique (10) selon l'une des revendications précédentes, lequel est dépourvu d'un modèle négatif ou d'un modèle positif du motif à former.

11. Dispositif optoélectronique (10) selon l'une des revendications précédentes, avec lequel la puce en semiconducteur (2), vue de dessus sur une surface de puce (7) faisant face à l'élément optique (1), présente une aire de surface supérieure à 150 $\mu$m x 150 $\mu$m et inférieure à 400 $\mu$m x 400 $\mu$m.

12. Dispositif optoélectronique (10) selon l'une des revendications précédentes, avec lequel la puissance de rayonnement émise par chaque zone de lentille (6) individuelle s'écarte au maximum de 25 % d'une valeur moyenne.

13. Dispositif optoélectronique (10) selon l'une des revendications précédentes, avec lequel les surfaces de traversée de rayonnement (34) des zones de lentille (6) individuelles sont façonnées en forme libre avec exactement un plan de symétrie, sphériques, asphériques ou biconiques.

14. Dispositif optoélectronique (10) selon l'une des revendications précédentes, lequel est configuré pour générer un motif de référence pour une unité de mise au point automatique d'un appareil d'enregistrement d'images.

15. Appareil d'enregistrement d'images comprenant un dispositif optique (10) selon l'une des revendications précédentes et comprenant un capteur (11) qui est conçu pour une mise au point automatique.

# FIG 1

A)

B)

FIG 2

A)

B)

FIG 3

A)

B)

## FIG 4

## FIG 5

# FIG 6

## A)

## B)

## C)

# FIG 7

A)

B)

C)

D)

E)

F)

G)

H)

## FIG 8

## FIG 9

# FIG 10

# FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5572368 A
- US 20030227685 A1
- US 20020027607 A1
- US 5612821 A
- US 20060255353 A1